(19) Europäisches Patentamt
European Patent Office
Office européen des brevets

(11) Veröffentlichungsnummer : **0 043 050**
**B1**

(12) **EUROPÄISCHE PATENTSCHRIFT**

(45) Veröffentlichungstag der Patentschrift : **11.04.84**

(51) Int. Cl.$^3$ : **C 08 G 18/62**, C 09 J 3/16, C 09 J 3/14, C 08 L 33/06

(21) Anmeldenummer : **81104746.3**

(22) Anmeldetag : **20.06.81**

(54) **Härtbares Klebmittel.**

(30) Priorität : **01.07.80 DE 3024869**

(43) Veröffentlichungstag der Anmeldung : **06.01.82 Patentblatt 82/01**

(45) Bekanntmachung des Hinweises auf die Patenterteilung : **11.04.84 Patentblatt 84/15**

(84) Benannte Vertragsstaaten : **AT BE CH DE FR GB IT LI LU NL SE**

(56) Entgegenhaltungen :
**DE-A- 2 643 642**
**FR-A- 1 533 520**
**FR-A- 2 029 778**

(73) Patentinhaber : **Th. Goldschmidt AG**
**Goldschmidtstrasse 100 Postfach 101461**
**D-4300 Essen 1 (DE)**

(72) Erfinder : **Fock, Jürgen, Dr.**
**Mörsenbroicher Weg 114**
**D-4000 Düsseldorf 30 (DE).**
Erfinder : **Schedlitzki, Dietmar, Dr.**
**Potthoffs Börde 18**
**D-4300 Essen (DE)**

**EP 0 043 050 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Härtbares Klebmittel

Die Erfindung betrifft ein härtbares Klebmittel auf Basis eines reaktiven Acrylat- und/oder Methacrylatcopolymerisates.

Aus der DE-PS 25 24 197 ist die Verwendung eines Terpolymerisates, bestehend aus

20 bis 45 Gew.-% Acryl- und/oder Methacrylnitril,
45 bis 70 Gew.-% eines Acrylsäurealkylesters mit 1 bis 12 C-Atomen im Alkylrest und
1 bis 10 Gew.-% Acryl-, Methacryl- oder Itaconsäure,

wobei die Summe der Monomeren 100 Gew.-% betragen muß und das erhaltene Copolymerisat eine Grenzviskosität von 0,1 bis 0,8 [100 ml · $g^{-1}$] bei 20 °C in Chloroform aufweist, gegebenenfalls in Gemisch mit bis zu 35 Gew.-% eines Epoxidharzes oder eines Glycidylgruppen enthaltenden Phenolformaldehydharzes, als Klebmittel bekannt. Diese Klebmittel ermöglichen Verklebungen hoher Zugscherfestigkeit und guter Schälfestigkeit. Das Klebmittel kann als Folie zum Verkleben von Metalloberflächen, aber auch zum Verkleben von Kunststoffolien mit Metalloberflächen verwendet werden. Sind diese Klebmittel frei von Epoxidharzen oder von Glycidylgruppen enthaltenden Phenolformaldehydharzen, bleiben die Klebmittel thermoplastisch. Bei Anwesenheit von Epoxidharzen oder von Glycidylgruppen enthaltenden Phenolformaldehydharzen im Klebmittel sind die Klebmittel hitzehärtbar, wobei Temperaturen von etwa 130 °C zur Aushärtung benötigt werden.

In einer älteren, noch nicht veröffentlichten Patentanmeldung (P 29 26 284.8-43) ist ein hitzehärtbares Klebmittel beschrieben, welches als wirksame Bestandteile

a) 20 bis 80 Gew.-% eines Copolymerisates, welches durch Polymerisation von

$a_1$) 20 bis 45 Gew.-% Acryl- und/oder Methacrylnitril,

$a_2$) 35 bis 65 Gew.-% eines oder mehrerer Alkylester der Acryl- und/oder Methacrylsäure mit 1 bis 12 C-Atomen im Alkylrest,

$a_3$) 10 bis 20 Gew.-% Acryl-, Methacryl- und/oder Itaconsäure,

$a_4$) 0 bis 15 Gew.-% Acryl- und/oder Methacrylamid,

erhalten worden ist, wobei die Summe der Monomeren 100 Gew.-% ergeben muß und wobei das Copolymerisat eine Grenzviskosität von 0,1 bis 0,8 [100 ml · $g^{-1}$] bei 20 °C in Methylacetat aufweist,

b) 10 bis 70 Gew.-% eines Epoxidharzes und/oder eines Glycidylgruppen enthaltenden Phenolformaldehydharzes,

c) 0,2 bis 15 Gew.-% eines in der Wärme wirksamen Härters für die Komponente b),

d) 0 bis 5 Gew.-% eines Beschleunigers für die Reaktion der Komponente b) mit den Komponenten a) und c),

wobei die Summe a) dis d) 100 Gew.-% ergeben muß, gegebenenfalls neben üblichen Zusätzen, wie Klebhilfsmittel, Haftvermittler, Pigmente und Füllstoffe,
enthält.

Gegenüber den Klebmitteln der DE-PS 25 24 197 härten diese Klebmittel bereits bei Temperaturen von 100 bis 130 °C aus. Hierdurch gelingt es, die thermische Belastung zu verklebender Kunststoffe gering zu halten. Hierdurch bleiben Eigenschaften, wie Oberflächengüte und Glanz der Kunststoffe erhalten. Die durch Verklebung erhaltenen Verbundwerkstoffe aus Kunststoff und Metall können in üblicher Weise ohne Beeinträchtigung der Haftung verformt werden.

Der Erfindung liegt die Aufgabe zugrunde, ein Klebmittel zu finden, welches bei niedrigeren Temperaturen, z. B. bereits bei 80 °C und darunter, reaktiv ausgehärtet werden kann. Derartige Klebmittel erfahren dadurch eine breitere Anwendbarkeit, insbesondere bei der Verklebung von Kunststoffen und sind dann in größerem Umfang verwendbar. Sie können beispielsweise bei der Herstellung von Skiern auf Verbundwerkstoffbasis verwendet werden, da bei der Skiherstellung z. B. eine Verklebungstemperatur von 90 °C im Regelfall nicht überschritten wird. Diese Erniedrigung der Aushärtungszeit darf aber nicht mit einer Verringerung der Adhäsion des Klebstoffes auf den Grenzflächen erkauft werden. Eine weitere Aufgabe der Erfindung ist deshalb, neben der Erniedrigung der Aushärtungszeiten Klebstoffe aufzufinden, deren adhäsive und elastische Eigenschaften sowie deren Beständigkeit gegenüber Feuchtigkeit und anderen Witterungseinflüssen erhalten bleiben.

Überraschenderweise werden diese Aufgaben erfindungsgemäß durch ein Klebmittel erfüllt, welches als wirksame Bestandteile

a) ein Copolymerisat, welches durch Polymerisation von

$a_1$) 35 bis 70 Gew.-% eines oder mehrerer Alkylester der Acryl- und/oder Methacrylsäure mit 1 bis 8 Kohlenstoffatomen im Alkylrest,

$a_2$) 20 bis 45 Gew.-% Acryl- und/oder Methacrylnitril und/oder Vinylacetat,

$a_3$) 10 bis 20 Gew.-% eines oder mehrerer ω-Hydroxyalkylester der Acryl- und/oder Methacrylsäure mit 1 bis 5 Kohlenstoffatomen im Alkylrest und

$a_4$) 0 bis 15 Gew.-% Acryl- und/oder Methacrylamid,

$a_5$) 0 bis 35 Gew.-% Acryl- oder Vinylmonomere von den Komponenten $a_1$) bis $a_4$) abweichender Zusammensetzung,

erhalten worden ist, wobei die Summe der Monomeren $a_1$) bis $a_5$) 100 Gew.-% ergeben muß, und das Copolymerisat eine Grenzviskosität von 0,05 bis 0,6 [100 ml · $g^{-1}$] bei 25 °C in Methylacetat aufweist,

b) ein oder mehrere Polyisocyanate und/oder deren partielle Umsetzungsprodukte mit Polyolen, wobei das Molekül im Durchschnitt mindestens 2 Isocyanatgruppen aufweisen muß,

wobei die Komponenten a) und b) in einem solchen Verhältnis vorliegen, daß einer Hydroxylgruppe der Komponente a) 1 bis 1,5 Isocyanatgruppen der Komponente b) entsprechen,

sowie gegebenenfalls übliche Zusätze, wie Beschleuniger, Klebhilfsmittel, Pigmente und Füllstoffe, enthält.

Das der Aushärtung des Klebmittels zugrunde liegende Reaktionsprinzip ist die Umsetzung der Hydroxylgruppen der Acryl- und/oder Methacrylsäure-ω-hydroxyalkylester (Komponente $a_3$)) mit den Isocyanatgruppen der Polyisocyanate oder deren partiellen Umsetzungsprodukten mit Polyolen (Komponente b)). Es ist zwar aus dem Stand der Technik bekannt, daß man dieses Reaktionsprinzip für Aushärtungszwecke einsetzen kann, jedoch hat es sich in der Praxis gezeigt, daß bei diesem Reaktionsprinzip die Haftung der Klebstoffe auf Kunststoffoberflächen im allgemeinen unbefriedigend ist, wenn man als Polyolkomponente Polyetherole einsetzt, und daß bei Klebstoffen auf Basis von Polyesterolen die Haftung auf Metalloberflächen der Einwirkung von Wasser oder Wasserdampf auf Dauer nicht standhält. Es war deshalb überraschend, daß das erfindungsgemäße Klebmittel alle oben genannten erforderlichen Eigenschaften aufweist.

Als Acrylat- und/oder Methacrylatcopolymerisat wird vorzugsweise ein solches verwendet, welches eine Grenzviskosität von 0,1 bis 0,4 [100 ml · $g^{-1}$] bei 25 °C in Methylacetat aufweist.

Die Polymerisation des Copolymerisates a) erfolgt in dem Fachmann bekannter Weise. Die Polymerisation kann als Emulsions- oder Lösungspolymerisation durchgeführt werden. Bevorzugt ist die Polymerisation in einem Lösungsmittel, da bei einer Emulsionspolymerisation im Hinblick auf die Umsetzung mit Isocyanaten eine sorgfältige Trocknung der Produkte erforderlich ist.

Beispiele für geeignete Monomere $a_1$) sind Ethylacrylat, Butylacrylat, Butylmethacrylat, Methylacrylat, Methylmethacrylat, 2-Ethylhexylacrylat oder 2-Ethylhexylmethacrylat.

Beispiele geeigneter Monomere $a_3$) sind 2-Hydroxyethylacrylat oder -methacrylat, 3-Hydroxypropylacrylat oder -methacrylat, Butandiol-1,4-monoacrylat oder -monomethacrylat.

Beispiele für geeignete Monomere $a_5$) sind Styrol, Vinylpropionat oder Methylvinylketon.

Als Polyisocyanat wird vorzugsweise ein Polyisocyanat der allgemeinen Formel

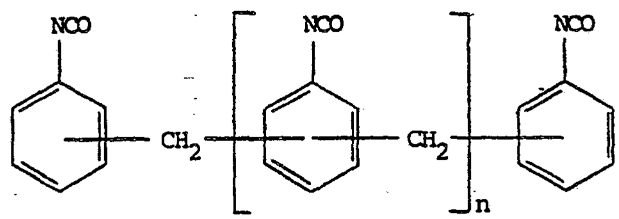

wobei n ≤ 3 ist,
oder

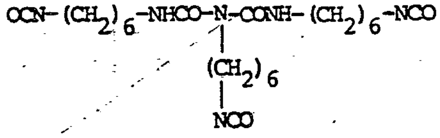

verwendet. Diese Isocyanate sind im Handel erhältlich. Jedoch sind auch andere Polyisocyanate, wie z. B. 1,6-Hexamethylendiisocyanat, 2,4,4-Trimethyl-1,6-hexamethylendiisocyanat, 3-Isocyanatomethyl-3,5,5-trimethylcyclohexylisocyanat, 1,4-Tetramethylendiisocyanat, 2,4- und 2,6-Hexahydrotoluylendiisocyanat, Hexahydro-1,3- bzw. -1,4-phenylen-diisocyanat, 1,3- und 1,4-Phenylendiisocyanat, 2,4- und 2,6-Toluylendiisocyanat, 4,4'-Diisocyanato-diphenylmethan, Naphthylen-1,5-diisocyanat, m-Xylylen-diisocyanat, Tris-(4-isocyanatophenyl)-thiophosphat, 4,4',4''-Triisocyanatotriphenylmethan, 2,4,6-Triisocyanato-toluol oder 2,4,4'-Triisocyanato-diphenylether geeignet. Die Isocyanate müssen jedoch die Bedingung erfüllen, daß sie im Durchschnitt mindestens 2 Isocyanatgruppen pro Molekül aufweisen.

Anstelle der reinen Polyisocyanate können auch deren partielle Umsetzungsprodukte mit Polyether- oder Polyesterpolyolen verwendet werden. Dabei wird ein Klebmittel bevorzugt, bei dem die Komponente b) ein partielles Umsetzungsprodukt eines oder mehrerer Polyisocyanate mit Polyether- oder Polyesterpolyolen eines Molekulargewichtes < 2 000 ist, wobei die Polyether- oder Polyesterpolyole im

durchschnittlichen Molekül mindestens 2 Hydroxylgruppen aufweisen, und wobei die Polyisocyanate mit den Polyolen in einem solchen Verhältnis umgesetzt worden sind, daß einer Hydroxylgruppe 1,5 bis 3 Isocyanatgruppen entsprachen. Beispiele geeigneter Polyetherole sind lineare oder verzweigte Polyetherole auf Basis von Ethylenoxid, Propylenoxid und Butylenoxid, Polythioether und Addukte von Ethylenoxiden an Polyamine und alkoxylierte Phosphorsäuren.

Beispiele für geeignete Polyesterole sind lineare oder verzweigte Polyesterole, wie sie aus mehrwertigen, vorzugsweise zweiwertigen Carbonsäuren, wie Adipinsäure, Sebacinsäure, Phthalsäure, halogenierten Phthalsäuren, Maleinsäure, Benzol-1,2,4-tricarbonsäure, monomeren, dimeren oder trimeren Fettsäuren und mehrwertigen Alkoholen, wie z. B. Ethylenglykol, Polyethylenglykolen, Propylenglykol, Polypropylenglykolen, Butandiol-1,3 und -1,4, 2,2-Dimethylpropandiol-1,3, Hexandiol-1,6 1,1,1-Trimethylolpropan, Hexantriolen oder Glycerin auf üblichem Wege erhalten werden.

Die Umsetzung der Polyisocyanate mit den Polyether- oder Polyesterpolyolen erfolgt somit in einem solchen Verhältnis, daß im Umsetzungsprodukt je Molekül im Durchschnitt mindestens 2 Isocyanatgruppen vorliegen.

Die Aushärtungszeit bzw. Aushärtungstemperatur des Klebmittels kann in an sich bekannter Weise wesentlich durch Zusatz eines Beschleunigers verkürzt bzw. herabgesetzt werden. Besonders bevorzugt ist deshalb ein Klebmittel, welches als Beschleuniger bis zu 2 Gew.-%, bezogen auf die Summe der Komponenten a) und b), eines tertiären Amins und/oder einer zinnorganischen Verbindung enthält. Als tertiäre Amine sind besonders Dimethylbenzylamin, Dicyclohexylmethylamin, Dimethylpiperazin, Dimethylaminethanol, 1,2-Dimethylimidazol, N-Methyl- bzw. N-Ethyl-Morpholin, Dimethylcyclohexylamin, 1-Aza-bicyclo-(3,3,0)-octan oder 1,4-Diazabicyclo-(2,2,2)-octan geeignet. Beispiele gut brauchbarer zinnorganischer Verbindungen sind Dibutylzinndilaurat oder Zinn(II)-octoat.

Das erfindungsgemäße Klebmittel kann noch weitere Hilfsstoffe enthalten. Beispiele derartiger Hilfsstoffe sind Klebhilfsmittel, wie z. B. Polychloropren, Acrylnitrilbutadien-Copolymerisate, Polyamide oder Polyurethane. Diese Klebhilfsmittel werden vorzugsweise in Mengen bis zu 15 Gew.-%, bezogen auf 100 Gew.-% der Bestandteile a) bis b), zugesetzt.

Als Hilfsstoffe kann man dem Klebmittel auch Pigmente und/oder Füllstoffe zusetzen. Hierfür sind sowohl anorganische als auch organische Produkte, wie z. B. Titandioxid, Eisenoxid, Chromoxid, Bariumsulfat, Quarzmehl, Talkum, Bentonit, geeignet.

Die folgenden Beispiele dienen der weiteren Erläuterung der Erfindung. Sie zeigen die Herstellung der erfindungsgemäßen Klebmittel sowie die klebtechnischen Eigenschaften.

## Herstellung der erfindungsgemäßen Klebmittel

1. Rohstoffe

1.1. Acrylcopolymerisate a)

Zur Herstellung der Acrylcopolymerisate a) in Lösung werden die Monomeren $a_1$) bis $a_5$) in einem Lösungsmittelgemisch aus 50 Gew.-% Toluol, 30 Gew.-% Methylethylketon und 20 Gew.-% Ethylacetat bei 70 bis 80 °C, unter Zusatz von 0,3 bis 0,7 Gew.-% Azodiisobuttersäuredinitril und 0,4 Gew.-% n-Dodecylmercaptan durch übliche Lösungspolymerisation hergestellt. Der Feststoffgehalt der Copolymerisatlösung liegt bei 40 Gew.-%. Die chemische Zusammensetzung der einzelnen Copolymerisate und deren Grenzviskosität gehen aus Tabelle 1 hervor.

1.2. Polyisocyanate

Als Polyisocyanate werden zwei handelsübliche Produkte verwendet: unter der Bezeichnung b1 ein Polyphenylpolymethylen-polyisocyanat (Roh-MDI) der allgemeinen Formel

b1 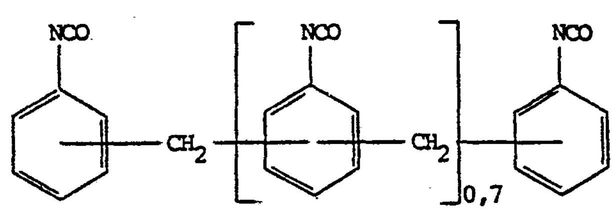

und unter der Bezeichnung b2 einen Triisocyanat der Formel

b2 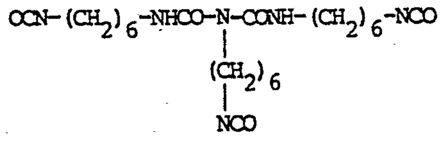

Beide Polyisocyanate werden in lösungsmittelfreier Form angewendet.

Des weiteren wird unter der Bezeichnung b3 eine 60 gew.-%ige Lösung in Methylethylketon eines Umsetzungsproduktes aus 3 Mol 2,4-Toluylendiisocyanat und 1 Mol eines trifunktionellen Polyesterols mit einem Molekulargewicht von 600, erhalten aus Adipinsäure, Ethylenglykol, 2,2-Dimethylpropandiol-1, 3 und Trimethylolpropan, eingesetzt.

Der Gehalt an freien Isocyanatgruppen, bezogen auf Feststoff, beträgt :

Polyisocyanat b1 31,2 Gew.-%
Polyisocyanat b2 22,7 Gew.-%
Polyisocyanat b3 11,2 Gew.-%

## Zubereitung der Klebmittel

Zur Herstellung der erfindungsgemäßen Klebmittellösungen werden die Polyisocyanate in den Lösungen der Acrylcopolymerisate gelöst, wobei zur Verdünnung des Klebers und Einstellung der gewünschten Viskosität weitere Lösungsmittel zugesetzt werden können. Als Lösungsmittel eignen sich vor allem Ketone, wie Aceton, Methylethylketon oder Methyl-n-propylketon, Ester, wie Ethyl- oder Butylacetat oder Aromaten, wie Toluol oder Xylol. Wegen der Reaktivität des Wassers gegenüber Isocyanatgruppen sind wasserfreie Lösungsmittel anzuwenden.

Weitere Zusätze, wie Beschleuniger Klebhilfsmittel, Pigmente und Füllstoffe, können in der erhaltenen Lösung gelöst bzw. dispergiert werden.

Die genauen Rezepturen der Klebmittel sind der Tabelle 1 zu entnehmen. Die Rezepturen der Nrn. 1 bis 11 beschreiben die erfindungsgemäßen Klebmittel. Danach folgen unter den Rezeptur-Nrn. 12 bis 15 Vergleichsklebmittel. Die Rezepturen Nr. 12 und Nr. 13 enthalten Klebmittel der DE-AS 25 24 197 bzw. der Patentanmeldung P 29 26 284.8-43, in denen ein carboxylgruppenhaltiges Acrylcopolymerisat mit Epoxidharz gehärtet wird. Das Epoxidharz ist auf Basis von Bisphenol A/Epichlorhydrin und hat ein Epoxidäquivalent von 180 g/val.

Das Vergleichsklebmittel Nr. 14 enthält anstelle des Acrylcopolymerisates ein difunktionelles Polyetherol auf Basis von Propylen- und Ethylenoxid mit einer Hydroxylzahl von 90 mg KOH/g.

Das Vergleichsklebmittel Nr. 15 enthält anstelle des Acrylcopolymerisates ein Polyesterol mit einer Funktionalität von ca. 2,5 und einer Hydroxylzahl von 109 mg KOH/g. Der Polyester ist durch Kondensation von Adipinsäure mit Diethylenglykol, Ethylenglykol und Trimethylolpropan erhalten worden.

Die Mengenangaben der einzelnen Komponenten in der Tabelle 1 beziehen sich auf Feststoffanteile.

## Verklebung und anwendungstechnische Prüfung der Klebmittel

Zur anwendungstechnischen Prüfung der Klebmittel werden zwei Festigkeitsprüfungen herangezogen :

a) Trommelschälfestigkeit nach DIN 53 295
b) Winkelschälfestigkeit nach DIN 53 282

Die Trommelschälfestigkeit wird an drei verschiedenen Verbunden ermittelt :

Verbund Aluminium/Polyethylen (PE)
Verbund Aluminium/Epoxidharz-Glasfaser-Laminat (GFK)
Verbund Aluminium/ABS

Die Aluminiumbleche bestehen aus der Qualität Al Cu Mg 2pl FH und werden vor dem Verkleben entfettet und einem Chromat-Schwefelsäure-Beizprozeß (Pickling-Beize) unterzogen. Das Polyethylen ist aufgerauht und vorbehandelt, und das Epoxidharz-Glasfaser-Laminat (GFK) ist angeschliffen.

Die Klebmittel werden in einer Menge von 60 g/m$^2$ Feststoff auf die Adhärenden aufgetragen, und die Lösungsmittel bei Raumtemperatur oder erhöhter Temperatur, z. B. 70 °C, abgedunstet. Die Aushärtung der Klebmittel wird bei 90 °C während 12 Minuten unter einem Preßdruck von 0,5 N/mm$^2$ vorgenommen. Nach Abkühlung wird bei 20 °C geschält.

Die Winkelschälfestigkeit wird an Probekörpern aus aufgerauhtem, vorbehandeltem Polyethylen einer Dicke von 1,2 mm ermittelt. Der Kleberauftrag, die Abdunstung der Lösungsmittel und die Aushärtung werden, wie oben beschrieben, durchgeführt. Die Winkelschälprüfung wird bei 20 °C vorgenommen. Zusätzlich wird mit weiteren Probekörpern eine Heißwasserlagerung bei 95 °C über 3 Tage durchgeführt. Vor dem Schälversuch werden die Probekörper in Wasser von 20 °C abgekühlt und noch feucht geschält. Diese Heißwasserlagerung ist als Kurzzeittest sehr gut geeignet, um die Beständigkeit der Klebmittel gegenüber Wasser und Feuchtigkeit zu prüfen.

Die erhaltenen Festigkeitswerte sind in der Tabelle 2 angeführt. Aus den Werten geht hervor, daß die Vergleichskleber Nr. 12 und Nr. 13 erheblich geringere Festigkeitswerte als die erfindungsgemäßen Klebmittel Nr. 1 bis Nr. 11 liefern. Vergleichskleber gemäß Rezeptur Nr. 14 haften sehr schlecht auf Kunststoffoberflächen. Vergleichskleber gemäß Rezeptur Nr. 15 haften zwar besser auf Kunststoffoberflächen, fallen aber nach der Wasserlagerung in der Festigkeit stark ab.

Abhängigkeit der Trommelschälfestigkeit von der Grenzviskosität des Copolymerisates a)

In der Klebmittelrezeptur Nr. 1 wird das Acrylcopolymerisat a) mit verschiedenen Grenzviskositätswerten eingesetzt. Die Abbildung 1 zeigt die Abhängigkeit der Trommelschälfestigkeit des Verbundes Aluminium/Polyethylen von der Grenzviskosität des Acrylcopolymerisates a). Es ist ersichtlich, daß besonders hohe Festigkeiten im Grenzviskositätsbereich 0,1 bis 0,4 (100 ml/g) erhalten werden.

(Siehe Tabellen, Seite 7 ff.)

Tabelle 1(a)

Klebmittelrezepturen

| Rezeptur Nr. | Acrylcopolymerisat a) | | | Polyisocyanat b) | Mol.-Verhältnis OH : NCO | Sonstige Zusätze |
|---|---|---|---|---|---|---|
| | Zusammensetzung Gew.-% | Grenzviskosität 100 ml/g | Gew.-Teile | Gew.-Teile | | Gew.-Teile |
| 1 | 54,0 Ethylacrylat $a_1$<br>31,4 Acrylnitril $a_2$<br>14,6 2-Hydroxyethyl-methacrylat $a_3$ | 0,15 | 100 | 18,1 b1 | 1 : 1,20 | - |
| 2 | 30,0 Ethylacrylat $a_1$<br>24,0 Methylmeth-acrylat $a_1$<br>31,4 Acrylnitril $a_2$<br>14,6 2-Hydroxyethyl-methacrylat $a_3$ | 0,18 | 100 | 18,9 b1 | 1 : 1,25 | - |
| 3 | 54,0 Ethylacrylat $a_1$<br>32,0 Vinylacetat $a_2$<br>14,0 2-Hydroxyethyl-acrylat $a_3$ | 0,18 | 100 | 18,0 b1 | 1 : 1,10 | - |
| 4 | 41,5 Ethylacrylat $a_1$<br>10,0 Butylacrylat $a_1$<br>36,0 Acrylnitril $a_2$<br>12,5 2-Hydroxyethyl-methacrylat $a_3$ | 0,27 | 100 | 15,5 b1 | 1 : 1,20 | - |

Tabelle 1(b)

Klebmittelrezepturen

| Rezeptur Nr. | Acrylcopolymerisat a) Zusammensetzung Gew.-% | Grenzviskosität 100 ml/g | Gew.-Teile | Polyisocyanat b) Gew.-Teile | Mol.-Verhältnis OH : NCO | Sonstige Zusätze Gew.-Teile |
|---|---|---|---|---|---|---|
| 5 | 52,4 Ethylacrylat $a_1$<br>32,5 Acrylnitril $a_2$<br>11,5 2-Hydroxyethyl-methacrylat $a_3$<br>3,6 Methacrylamid $a_4$ | 0,32 | 100 | 14,3 b1 | 1 : 1,20 | - |
| 6 | 30,0 Ethylacrylat $a_1$<br>20,0 Methylmeth-acrylat $a_1$<br>33,8 Acrylnitril $a_2$<br>16,2 3-Hydroxypropyl-acrylat $a_3$ | 0,22 | 100 | 19,4 b1 | 1 : 1,15 | - |
| 7 | 20,0 Methylmeth-acrylat $a_1$<br>15,0 Butylmeth-acrylat $a_1$<br>31,0 Acrylnitril $a_2$<br>14,0 2-Hydroxyethyl-methacrylat $a_3$<br>20,0 Styrol $a_5$ | 0,15 | 100 | 16,1 b1 | 1 : 1,10 | - |

Tabelle 1(c)

Klebmittelrezepturen

| Rezeptur Nr. | Acrylcopolymerisat a) | | | Polyisocyanat b) | Mol.-Verhältnis | Sonstige Zusätze |
|---|---|---|---|---|---|---|
| | Zusammensetzung Gew.-% | Grenzviskosität 100 ml/g | Gew.-Teile | Gew.-Teile | OH : NCO | Gew.-Teile |
| 8 | 54,0 Ethylacrylat $a_1$<br>31,4 Acrylnitril $a_2$<br>14,6 2-Hydroxyethylmethacrylat $a_3$ | 0,15 | 100 | 24,9 b2 | 1 : 1,20 | 0,1 1,4-Diazabicyclo(2,2,2)-octan |
| 9 | 54,0 Ethylacrylat $a_1$<br>31,4 Acrylnitril $a_2$<br>14,6 2-Hydroxyethylmethacrylat $a_3$ | 0,15 | 100 | 50,4 b3 | 1 : 1,20 | - |
| 10 | 30,0 Ethylacrylat $a_1$<br>24,0 Methylmethacrylat $a_1$<br>31,4 Acrylnitril $a_2$<br>14,6 2-Hydroxyethylmethacrylat $a_3$ | 0,18 | 100 | 18,9 b1 | 1 : 1,25 | 20,0 Titandioxid |
| 11 | 30,0 Ethylacrylat $a_1$<br>24,0 Methylmethacrylat $a_1$<br>31,4 Acrylnitril $a_2$<br>14,6 2-Hydroxyethylmethacrylat $a_3$ | 0,18 | 100 | 24,9 b2 | 1 : 1,20 | 0,1 1,4-Diazabicyclo(2,2,2)-octan<br>10,0 Polychloropren (mittelstark kristallisierend; Mooney-Plastizität 50) |

Tabelle 1(d)

Vergleichsklebmittel

| Rezeptur Nr. | Acrylcopolymerisat a) | | | Polyisocyanat b) | Mol.-Verhältnis | Sonstige Zusätze |
|---|---|---|---|---|---|---|
| | Zusammensetzung Gew.-% | Grenzviskosität 100 ml/g | Gew.-Teile | Gew.-Teile | OH : NCO | Gew.-Teile |
| 12 DE-PS 25 24 197 | 60,9 Ethylacrylat<br>35,4 Acrylnitril<br>3,7 Acrylsäure | 0,35 | 80 | - | - | 20,0 Epoxidharz |
| 13 P 29 26 284.8-43 | 52,0 Ethylacrylat<br>33,0 Acrylnitril<br>15,0 Acrylsäure | 0,22 | 71 | - | - | 25,4 Epoxidharz<br>3,6 Pyromellitsäure-dianhydrid |
| 14 | Polyetherol | - | 100 | 25,9 b1 | 1 : 1,20 | - |
| 15 | Polyesterol | - | 100 | 31,4 b1 | 1 : 1,20 | - |

Tabelle 2

Anwendungstechnische Prüfung der Klebmittel

| Klebmittelrezeptur Nr. | Trommelschälfestigkeit DIN 53 295 Nmm/mm | | | Winkelschälfestigkeit DIN 53 282 N/mm | |
|---|---|---|---|---|---|
| | Al/PE | Al/GFK | Al/ABS | ohne Belastung | nach 3 Tagen Heißwasserlagerung |
| 1 | 315 | 65 | 85 | 4,8 | 4,5 |
| 2 | 305 | 76 | 110 | 5,3 | 5,2 |
| 3 | 310 | 71 | 90 | 4,5 | 4,0 |
| 4 | 285 | 50 | 80 | 4,9 | 4,8 |
| 5 | 290 | 48 | 88 | 5,4 | 5,0 |
| 6 | 285 | 53 | 105 | 5,0 | 4,7 |
| 7 | 315 | 65 | 88 | 4,8 | 4,6 |
| 8 | 270 | 60 | 80 | 4,7 | 4,5 |
| 9 | 265 | 64 | 88 | 4,8 | 4,6 |
| 10 | 295 | 56 | 106 | 5,1 | 5,0 |
| 11 | 290 | 54 | 98 | 4,6 | 4,5 |
| Vergleichskleber | | | | | |
| 12 | 45 | 20 | 27 | 1,2 | 1,0 |
| 13 | 70 | 28 | 39 | 1,4 | 1,2 |
| 14 | 5 | 3 | 5 | 0,1 | 0,07 |
| 15 | 145 | 39 | 48 | 3,0 | 0,73 |

**Ansprüche**

1. Härtbares Klebmittel auf der Basis eines hydroxylgruppenhaltigen Acrylatcopolymers und eines Polyisocyanats, dadurch gekennzeichnet, daß es als wirksame Bestandteile

a) ein Copolymerisat, welches durch Polymerisation von

$a_1$) 35 bis 70 Gew.-% eines oder mehrer Alkylester der Acryl- und/oder Methacrylsäure mit 1 bis 8 Kohlenstoffatomen im Alkylrest,

$a_2$) 20 bis 45 Gew.-% Acryl- und/oder Methacrylnitril und/oder Vinylacetat,

$a_3$) 10 bis 20 Gew.-% eines oder mehrer ω-Hydroxyalkylester der Acryl- und/oder Methacrylsäure mit 1 bis 5 Kohlenstoffatomen im Alkylrest und

$a_4$) 0 bis 15 Gew.-% Acryl- und/oder Methacrylamid,

$a_5$) 0 bis 35 Gew.-% Acryl- oder Vinylmonomere von den Komponenten $a_1$) bis $a_4$) abweichender Zusammensetzung,

erhalten worden ist, wobei die Summe der Monomeren $a_1$) bis $a_5$) 100 Gew.-% ergeben muß, und das Copolymerisat eine Grenzviskositat von 0,05 bis 0,6 [100 ml · $g^{-1}$] bei 25 °C in Methylacetat aufweist.

b) ein oder mehrere Polyisocyanate und/oder deren partielle Umsetzungsprodukte mit Polyolen, wobei das Molekül im Durchschnitt mindestens 2 Isocyanatgruppen aufweisen muß,

wobei die Komponenten a) und b) in einem solchen Verhältnis vorliegen, daß einer Hydroxylgruppe der Komponente a) 1 bis 1,5 Isocyanatgruppen der Komponente b) entsprechen,

sowie gegebenenfalls übliche Zusätze, wie Beschleuniger Klebhilfsmittel, Pigmente und Füllstoffe, enthält.

2. Klebmittel nach Anspruch 1, dadurch gekennzeichnet, daß die Komponente a) eine Grenzviskosität von 0,1 bis 0,4 [100 ml · $g^{-1}$] bei 25 °C in Methylacetat aufweist.

3. Klebmittel nach Anspruch 1 oder 2, dadurch gekennzeichnet, daß die Komponente b) ein Polyisocyanat der allgemeinen Formel

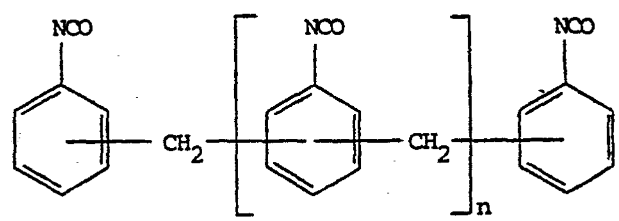

wobei n ≤ 3 ist,
oder

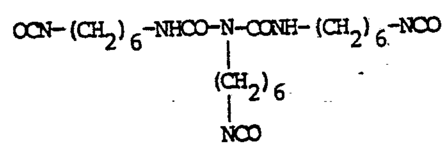

ist.

4. Klebmittel nach Anspruch 1 oder 2, dadurch gekennzeichnet, daß die Komponente b) ein partielles Umsetzungsprodukt eines oder mehrerer Polyisocyanate mit Polyether- oder Polyesterpolyolen eines Molekulargewichtes < 2 000 ist, wobei die Polyether- oder Polyesterpolyole im durchschnittlichen Molekül mindestens 2 Hydroxylgruppen aufweisen, und wobei die Polyisocyanate mit den Polyolen in einem solchen Verhältnis umgesetzt worden sind, daß einer Hydroxylgruppe 1,5 bis 3 Isocyanatgruppen entsprachen.

5. Klebmittel nach einem oder mehreren der vorhergehenden Ansprüche, dadurch gekennzeichnet, daß es als Beschleuniger bis zu 2 Gew.-%, bezogen auf die Summe der Komponenten a) und b), eines tertiären Amins und/oder einer zinnorganischen Verbindung enthält.

**Claims**

1. Curable adhesive, based on an acrylate copolymer, containing hydroxyl groups, and a polyisocyanate, characterised in that it contains, as the active constituents,

a) a copolymer obtained by polymerisation of

$a_1$) 35 to 70 % by weight of one or more alkyl esters of acrylic and/or methacrylic acid with 1 to 8 carbon atoms in the alkyl radical,

$a_2$) 20 to 45 % weight of acrylonitrile and/or methacrylonitrile and/or vinyl acetate,

$a_3$) 10 to 20 % by weight of one or more ω-hydroxyalkyl esters of acrylic and/or methacrylic acid with 1 to 5 carbon atoms in the alkyl radical, and

$a_4$) 0 to 15 % by weight of acrylamide and/or methacrylamide, and

$a_5$) 0 to 35 % by weight of acrylic monomers or vinyl monomers from amongst components $a_1$) to $a_4$) of different compositions,

the sum of the monomers $a_1$) to $a_5$) having to add up to 100 % by weight, and the copolymer having an intrinsic viscosity of 0.05 to 0.6 [100 ml × $g^{-1}$] in methyl acetate at 25 °C,

b) one or more polyisocyanates and/or partial reaction products thereof with polyols, it being necessary for the molecule to contain on average at least two isocyanate groups,

the components a) and b) being present in such a ratio that 1 to 1.5 isocyanate groups of component b) correspond to one hydroxyl group of component a),

and if appropriate conventional additives, such as accelerators, bonding aids, pigments and fillers.

2. Adhesive according to Claim 1, characterised in that component a) has an intrinsic viscosity of 0.1 to 0.4 [100 ml × $g^{-1}$] in methyl acetate at 25 °C.

3. Adhesive according to Claim 1 or 2, characterised in that the component b) is a polyisocyanate of the general formula

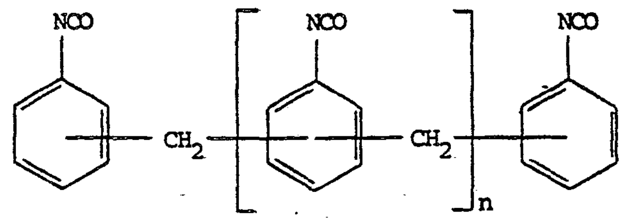

with n ≤ 3, or

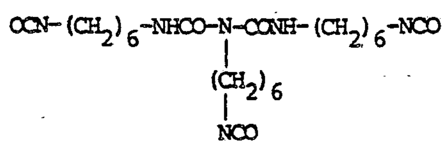

4. Adhesive according to Claim 1 or 2, characterised in that the component b) is a partial reaction product of one or more polyisocyanates with polyether-polyols or polyester-polyols having a molecular weight of < 2,000, the polyether-polyols or polyester-polyols having at least 2 hydroxyl groups in an average molecule, and the polyisocyanates having been reacted with the polyols in such a ratio that 1.5 to 3 isocyanate groups corresponded to one hydroxyl group.

5. Adhesive according to one or more of the preceding Claims, characterised in that, as an accelerator, it contains up to 2 % by weight, relative to the sum of components a) and b), of a tertiary amine and/or a tin-organic compound.

**Revendications**

1. Adhésif durcissable, à base d'un copolymère d'acrylates contenant des groupes hydroxyle et d'un polyisocyanate, caractérisé en ce qu'il contient en tant que constituants actifs

a) un copolymère, qui a été obtenu par polymérisation

$a_1$) de 35 à 70 % en poids d'un ou plusieurs esters alkyliques de l'acide acrylique et/ou méthacrylique, le groupe alkyle ayant 1 à 8 atomes de carbone,

$a_2$) de 20 à 45 % en poids d'acrylonitrile et/ou de méthacrylonitrile et/ou d'acétate de vinyle,

$a_3$) de 10 à 20 % en poids d'un ou plusieurs esters ω-hydroxyalkyliques de l'acide acrylique et/ou méthacrylique, le groupe alkyle contenant 1 à 5 atomes de carbone, et

$a_4$) de 0 à 15 % en poids d'acrylamide et/ou de méthacrylamide.

$a_5$) de 0 à 35 % en poids de monomères acryliques ou vinyliques, de composition s'écartant des composants $a_1$) à $a_4$), la somme des monomères $a_1$ à $a_5$) devant donner 100 % en poids, le copolymère présentant à 25 °C dans l'acétate de méthyle une viscosité limite de 0,05 à 0,6 (100 ml · $g^{-1}$) ;

b) un ou plusieurs polyisocyanates et/ou leurs produits de réaction partielle avec des polyols, la molécule devant présenter en moyenne au moins deux groupes isocyanates ;

les composants a) et b) devant se trouver en un rapport tel qu'à un groupe hydroxyle du composant a) correspondent 1 à 1,5 groupes isocyanates du composant b) ;

et éventuellement des additifs habituels, comme des accélérateurs, des auxiliaires d'adhérence, des pigments et des charges.

2. Adhésif selon la revendication 1, caractérisé en ce que le composant a) présente à 25 °C dans l'acétate de méthyle une viscosité limite de 0,1 à 0,4 (100 ml · $g^{-1}$).

3. Adhésif selon l'une quelconque des revendications 1 ou 2, caractérisé en ce que le composant b) est un polyisocyanate de formule

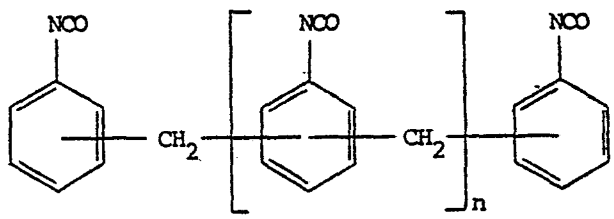

où $n \leq 3$,
ou

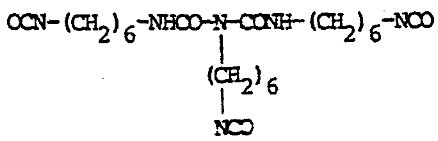

4. Adhésif selon l'une quelconque des revendications 1 ou 2, caractérisé en ce que le composant b) est un produit de réaction partielle d'un ou plusieurs polyisocyanates avec des polyéther- ou polyesterpolyols ayant une masse moléculaire < 2 000, les polyéther- ou polyesterpolyols présentant dans leur molécule moyenne au moins deux groupes hydroxyles, les polyisocyanates ayant été mis en réaction avec les polyols selon un rapport tel qu'à un groupe hydroxyle correspondent 1,5 à 3 groupes isocyanates.

5. Adhésif selon l'une quelconque des revendications 1 à 4, caractérisé en ce qu'il contient en tant qu'accélérateur jusqu'à 2 % en poids, sur la base de la somme des composants a) et b), d'une amine tertiaire et/ou d'un composé organique de l'étain.

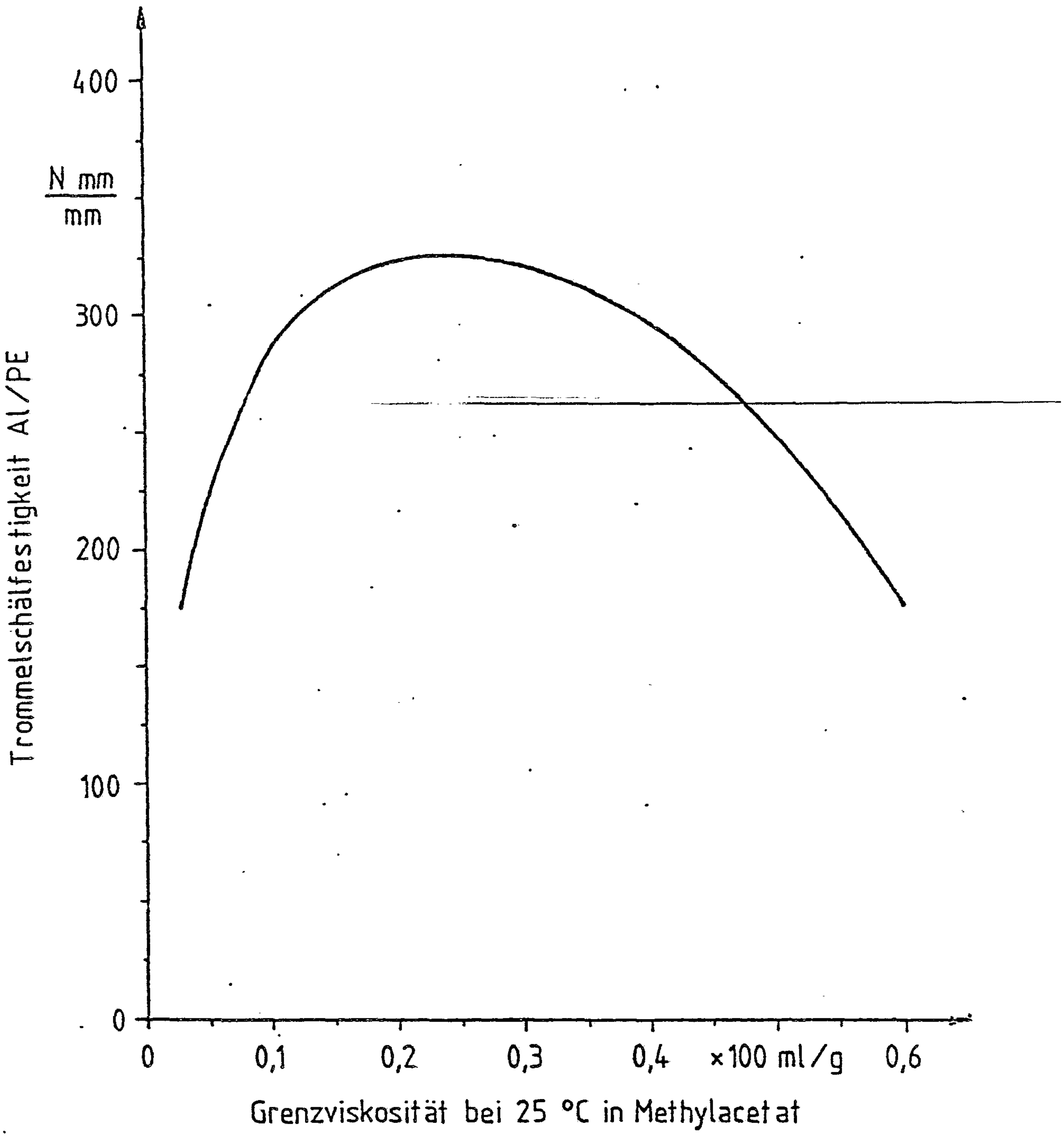
400
300
200
100
0
N mm / mm
Trommelschälfestigkeit Al/PE
0
0,1
0,2
0,3
0,4
×100 ml/g
0,6
Grenzviskosität bei 25 °C in Methylacetat

Fig.1